**Europäisches Patentamt**

**European Patent Office**

**Office européen des brevets**

(19)

(11) Veröffentlichungsnummer: **0 289 452**
**A2**

# (12) EUROPÄISCHE PATENTANMELDUNG

(21) Anmeldenummer: 88730103.4

(22) Anmeldetag: 29.04.88

(51) Int. Cl.4: **B 23 Q 3/155**

(30) Priorität: 01.05.87 DE 3714967
08.05.87 DE 3715874

(43) Veröffentlichungstag der Anmeldung:
02.11.88 Patentblatt 88/44

(84) Benannte Vertragsstaaten:
AT BE CH DE ES FR GB GR IT LI LU NL SE

(71) Anmelder: WERNER UND KOLB
WERKZEUGMASCHINEN GMBH
Fritz-Werner-Strasse
D-1000 Berlin 48 (DE)

(72) Erfinder: Hammer, Helmut, Dipl.-Ing.
Bernadottestrasse 9
D-1000 Berlin 33 (DE)

(74) Vertreter: Jander, Dieter, Dipl.-Ing. et al
Dipl.-Ing. Dieter Jander Dr.-Ing. Manfred Böning
Patentanwälte Kurfürstendamm 66
D-1000 Berlin 15 (DE)

(54) **Einrichtung zum Wechseln von Werkzeugen eines numerisch gesteuerten Bearbeitungszentrums.**

(57) Die Erfindung bezieht sich auf eine Einrichtung zum Wechseln von Werkzeugen eines numerisch gesteuerten Bearbeitungszentrums mit einem Werkzeug-Kettenmagazin das einen geraden Kettentrum aufweist. Bisher wurden hierbei die Werkzeuge nur einzeln gewechselt. Um den Werkzeugwechsel zu beschleunigen, wird eine Kassette (6) mit mehreren Werkzeugaufnahmen (7) vorgeschlagen, die eine Grundstellung und eine weitere Stellung einnehmen kann, wobei in der weiteren Stellung von der Kassette (6) an den Trum (1) oder umgekehrt ein Werkzeug oder mehrere Werkzeuge unmittelbar übergeben werden können und in der Grundstellung die Kassette (6) bezüglich der Werkzeuge be- und entladen oder gegen eine andere ausgetauscht werden kann.

Fig. 2

**Beschreibung**

### Einrichtung zum Wechseln von Werkzeugen eines numerisch gesteuerten Bearbeitungszentrums

Bei einem Bearbeitungszentrum mit einem Werkzeugmagazin, das einen geraden Kettentrum aufweist, wurden bisher die Werkzeuge einzeln per Hand oder mit einem Greifer automatisch ausgewechselt.

Der Erfindung liegt die Aufgabe zugrunde, den Werkzeugwechsel zu beschleunigen.

Diese Aufgabe wird erfindungsgemäß gelöst durch eine Kassette mit mehreren hintereinander angeordneten, zueinander unbeweglichen Werkzeugaufnahmen, die die gleichen Abstände wie die Werkzeugaufnahmen des Kettenmagazins haben, welche Kassette eine Grundstellung und eine erste Stellung einnehmen kann, wobei in der ersten Stellung von der Kassette an den Trum oder umgekehrt ein Werkzeug oder mehrere Werkzeuge unmittelbar übergeben werden können und in der Grundstellung die Kassette bezüglich der Werkzeuge be- und entladen oder gegen eine andere ausgetauscht werden kann (aber nicht muß).

Der Austausch erfolgt insbesondere dadurch, daß die Kassette von der sie tragenden Vorrichtung entfernt wird und die andere Kassette in diese eingeführt wird. Die Zahl der Werkzeugaufnahmen ist erfindungsgemäß größer als vier, insbesondere gleich 10.

Auf diese Weise ist eine Verkürzung der Werkzeugwechselzeit erreichbar. Mit Hilfe der Kassette können ein Werkzeug oder mehrere, z.B. alle in der Kassette befindlichen, automatisch in das Magazin eingelegt bzw. von diesem entnommen werden. Die Kassette wird in der Grundstellung bevorzugt per Hand be- und entladen oder bevorzugt per Hand gegen eine andere ausgetauscht.

Die im folgenden und in den Ansprüchen verwendeten Ausdrücke "vorn", "hinten", "seitlich" usw. beziehen sich auf das Bearbeitungszentrum, wobei "vorn" dort ist, wo sich die Arbeitsspindel befindet.

Die Erfindung bezieht sich primär auf eine Einrichtung der genannten Art, bei der die Kette des Magazins in einer vertikalen Ebene angeordnet ist, die Werkzeuge senkrecht zu dieser Ebene angeordnet sind und das Magazin durch Bewegungen der Werkzeuge in der Ebene be-bzw. entladen wird. Es sind dies Einrichtungen, bei denen die Werkzeugaufnahmen seitlich offen sind. Für diese Fälle wird erfindungsgemäß vorgeschlagen, daß sich die Werkzeugaustauschstelle im Bereich des unteren Kettentrums befindet und die Kassette von dem Trum weg sich zunächst nach unten und dann nach hinten und zum Trum hin in umgekehrter Richtung bewegt (Fall 1).

Ferner sind Einrichtungen der erwähnten Art bekannt, bei denen die Kette des Magazins in einer vertikalen Ebene angeordnet ist, die Werkzeuge senkrecht zu dieser Ebene angordnet sind und das Magazin durch Bewegungen der Werkzeuge senkrecht zu dieser Ebene be- und entladen wird. In diesem Falle sind die Aufnahmen für die Werkzeuge geschlossen. Hierfür wird erfindungsgemäß vorgeschlagen, daß sich die Werkzeugaustauschstelle im Bereich des unteren Kettentrums befindet und die Kassette von Trum weg sich zunächst seitlich horizontal, dann nach unten und dann nach hinten und zum Trum hin in umgekehrter Richtung bewegt (Fall 2).

Schließlich sind Einrichtungen der genannten Art bekannt, bei denen die Kette des Magazins in einer vertikalen Ebene angeordnet ist, die Werkzeuge in dieser Ebene angeordnet sind und das Magazin durch Bewegungen der Werkzeuge in der Ebene be- und entladen wird. Auch in diesem Falle sind die Werkzeugaufnahmen geschlossen. Hierfür wird erfindungsgemäß vorgeschlagen, daß sich die Werkzeugaustauschstelle im Bereich des unteren Kettentrums befindet und die Kassette vom Trum weg sich zunächst nach unten bewegt, dann seitlich horizontal und dann nach hinten und zum Trum hin in umgekehrter Richtung bewegt (Fall 3).

Selbstverständlich kann in den drei genannten Fällen 1 bis 3 die Übergabestelle erfindungsgemäß auch an einem anderen Trum angeordnet sein, insbesondere hinten oder oben.

Eine bevorzugte Lösung gemäß der Erfindung besteht darin, daß die Kassette so in der Übergabestelle in den Kettentrum, vorzugsweise den unteren horizontalen Kettentrum mit U-förmigen Aussparungen eingreift, daß durch Ver- und Entriegeln der im Eingriff befindlichen Werkzeugaufnahmetaschen des Kettenmagazins durch neben dem Kettentrum angeordnete einzeln oder blockweise ansteuerbare Betätigungseinheiten die Werkzeuge im Übergabebereich einzeln oder blockweise entweder von der Kassette in das Kettenmagazin übergeben werden, in dem die betreffenden Werkzeugaufnahmetaschen verriegelt werden, oder vom Kettenmagazin in die Kassette übernommen werden, in dem die betreffenden Aufnahmetaschen entriegelt werden, wobei die Werkzeuge in den U-förmigen Aussparungen gehalten werden, und ein Tisch vorgesehen ist, von dem aus die Kassette in die Übergabestellung gebracht bzw. von dort wieder entfernt werden kann und in die Wechselstellung überführbar ist, in der die Kassette austauschbar ist.

Weitere Einzelheiten der Erfindung ergeben sich aus der Zeichnung. Darin zeigen:

Fig. 1 eine Seitenansicht eines Bearbeitungszentrums,

Fig. 2 den linken, unteren Teil der Fig. 1 in vergrößertem Maßstab, wobei sich die Kassette in der Grundstellung befindet,

Fig. 3 den linken, unteren Teil der Fig. 1 in vergrößertem Maßstab, wobei sich die Kassette in der ersten Stellung befindet,

Fig. 4 den linken, unteren Teil der Fig. 1 in vergrößertem Maßstab, wobei sich die Kassette in einer weiteren Stellung befindet,

Fig. 5 den linken, unteren Teil des Bearbeitungszentrums, wobei sich die Kassette auf einem Fahrzeug befindet,

Fig. 6 die Teile: Kassette, Werkzeug und Werkzeugaufnahme des Kettenmagazins in einer Ansicht senkrecht zu den Ansichten der bisherigen Figuren,

Fig. 7 a, b, c den oberen, linken Teil der Fig. 6 in vergrößertem Maßstab, teilweise im Schnitt und teilweise mit weiteren Teilen, und zwar in drei Ansichten,

Fig. 8 eine perspektivische Ansicht der Kassette,

Fig. 9 a, b, c einen Teil der Kassette und einen Verriegelungsmechanismus in drei Ansichten,

Fig. 10 eine Ansicht entsprechend derjenigen der Fig. 6 einer anderen Ausführungsform und

Fig. 11 eine entsprechende Ansicht einer weiteren Ausführungsform.

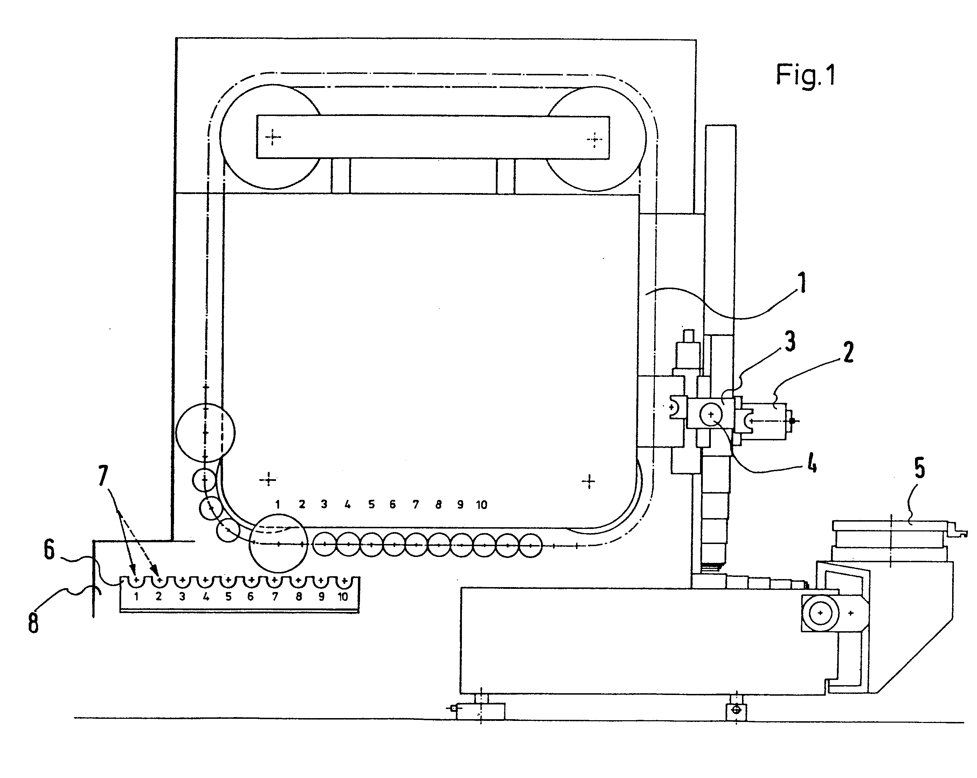

Fig. 1 zeigt, von der Seite her gesehen, ein Bearbeitungszentrum. Mit 1 ist ein Kettenmagazin für Werkzeuge, mit 2 eine Arbeitsspindel, mit 3 ein Werkzeugwechsler in Doppelgreiferausbildung, mit 4 die Achse, um die sich der Werkzeugwechsler drehen kann, mit 5 ein Werkstücktisch, mit 6 eine Werkzeugkassette, mit 7 Aussparungen in der Kassette, die Aufnahmen für Werkzeuge darstellen, und mit 8 eine Abdeckhaube bezeichnet.

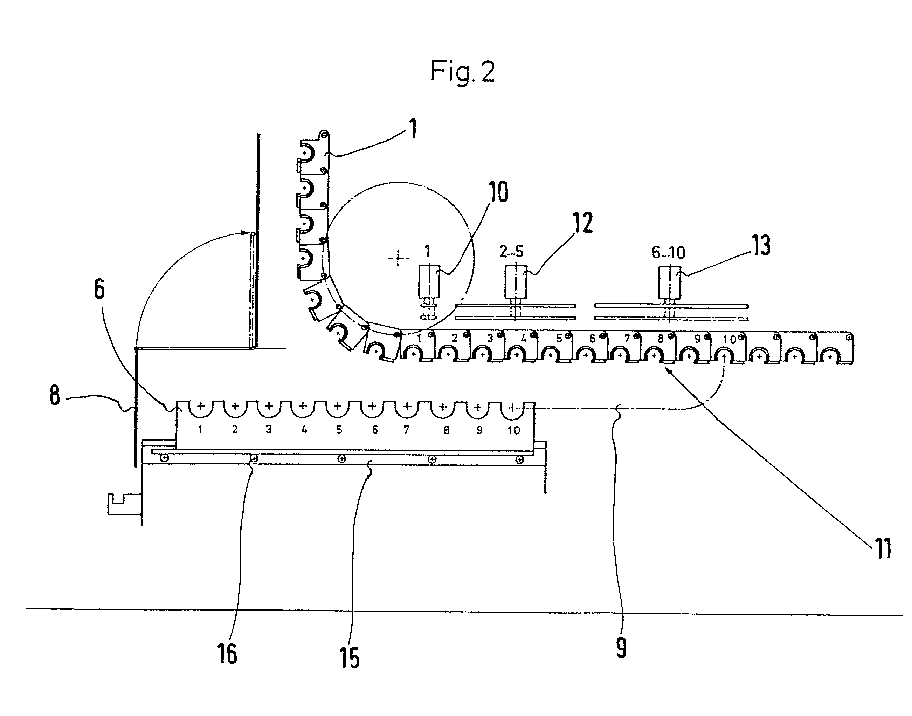

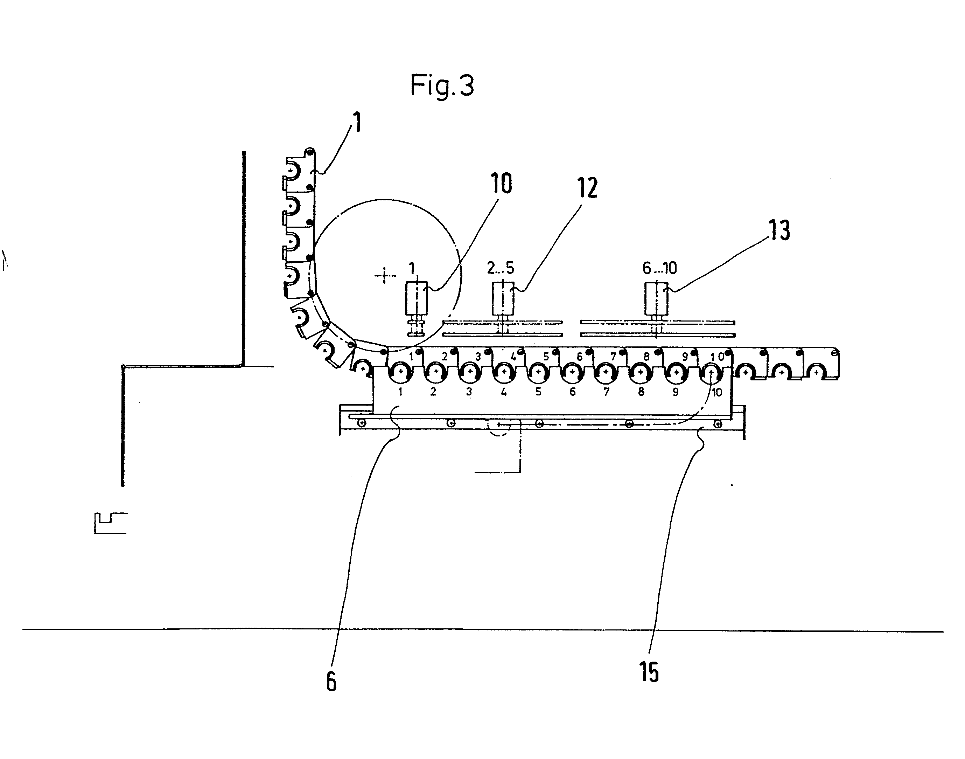

Die Bewegungsbahn, die die Kassette 6 vollführen kann, ist in Fig. 2 mit der strichpunktierten Linie 9 veranschaulicht. Mit 10 ist ein Entriegelungsmechanismus für den hintersten Platz Nr. 1 einer Werkzeugübergabestelle bezeichnet. Mit 12 ist ein Entriegelungsmechanismus für die Stellen 2 bis 5 der Übergabestelle bezeichnet. Mit 13 ist ein Entriegelungsmechanismus für die Stellen 6 bis 10 des Übergabebereiches 11 bezeichnet. Die Kassette befindet sich in Fig. 2 in der Grundstellung. Ist sie längs der strichpunktierten Linie 9 bewegt worden, befindet sie sich in unmittelbarer Nähe der Magazinkette 1 ("1. Stellung"). In dieser können Werkzeuge ausgetauscht werden. Die Fig. 3 zeigt diese Stellung.

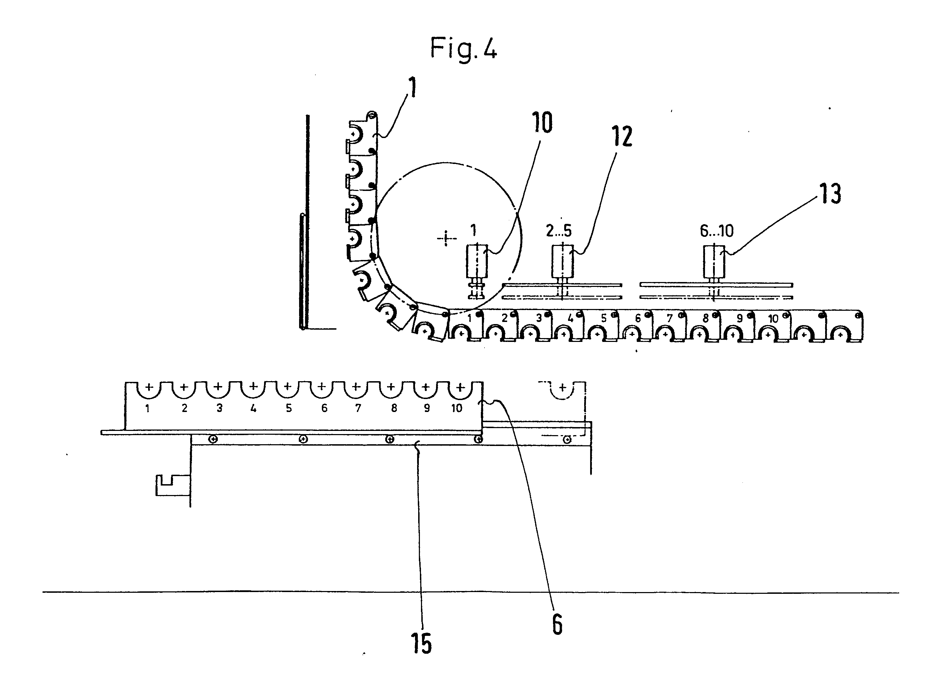

Während in der in Fig. 2 dargestellten Stellung der Kassette, der Grundstellung, lediglich ein Werkzeug in dem Platz Nr. 1 ausgewechselt werden kann, das dann in den Platz Nr. 1 des Kettenmagazins gebracht wird, können in einer weiteren Stellung der Kassette (s. Fig. 4) Werkzeuge per Hand in den Plätzen 1 bis 5 der Kassette gewechselt werden, die dann ihrerseits in die Plätze 1 bis 5 des Kettenmagazins transportiert werden.

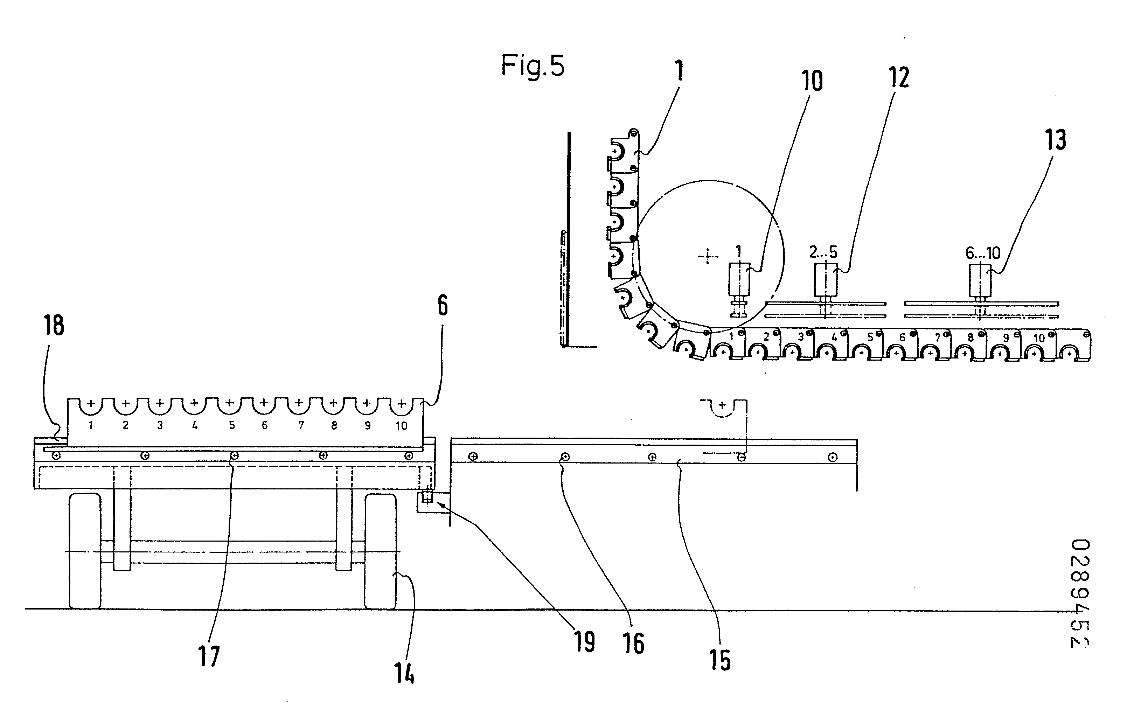

Fig. 5 zeigt eine weitere Variante: Bei dieser ist die Kassette 6 über die in Fig. 4 dargestellte Stellung hinaus auf einen handgesteuerten Elektrokarren 14 transportiert worden und kann von diesem in eine Werkzeug-Be- und Entladestation gebracht werden, wo sämtliche Plätze 1 bis 10 der Kassette von Werkzeugen befreit bzw. mit neuen Werkzeugen bestückt werden können. Diese werden dann in ähnlicher Weise, wie bereits beschrieben, in das Kettenmagazin, und zwar dort in die Plätze 1 bis 10 transportiert.

Wie man den Fig. 2 bis 5 entnehmen kann, ruht die Kassette 6 auf einem Tisch 15, der mit Rollen 16 versehen ist. Die Einrichtung weist einen nicht dargestellten Transportmechanismus auf, der den Tisch mit er Kassette aus der Grundstellung (Fig. 2) in die erste Stellung (Fig. 3) und zurück transportiert. Aus der Grundstellung in die Stellung, die die Fig. 4 veranschaulicht, wird die Kassette durch einen weiteren Mechanismus (nicht dargestellt) transportiert. Auf das Fahrzeug 14 wird die Kassette dann per Hand gezogen. Das Fahrzeug 14 ist ebenfalls mit Rollen 17 bestückt. Ferner weist es eine Führungsschiene 18 auf, die primär dafür sorgt, daß die unsymmetrisch belastete Kassette 6 nicht kippt. Mit 19 ist ein Zentriermechanismus bezeichnet, der dafür sorgt, daß das Fahrzeug 14 stets in bestimmten Sollstellungen steht, wenn die Kassetten ausgetauscht werden sollen. Zweckmäßigerweise weist das Fahrzeug 14 mehrere, z.B. drei Kassettenaufnahmestellen auf.

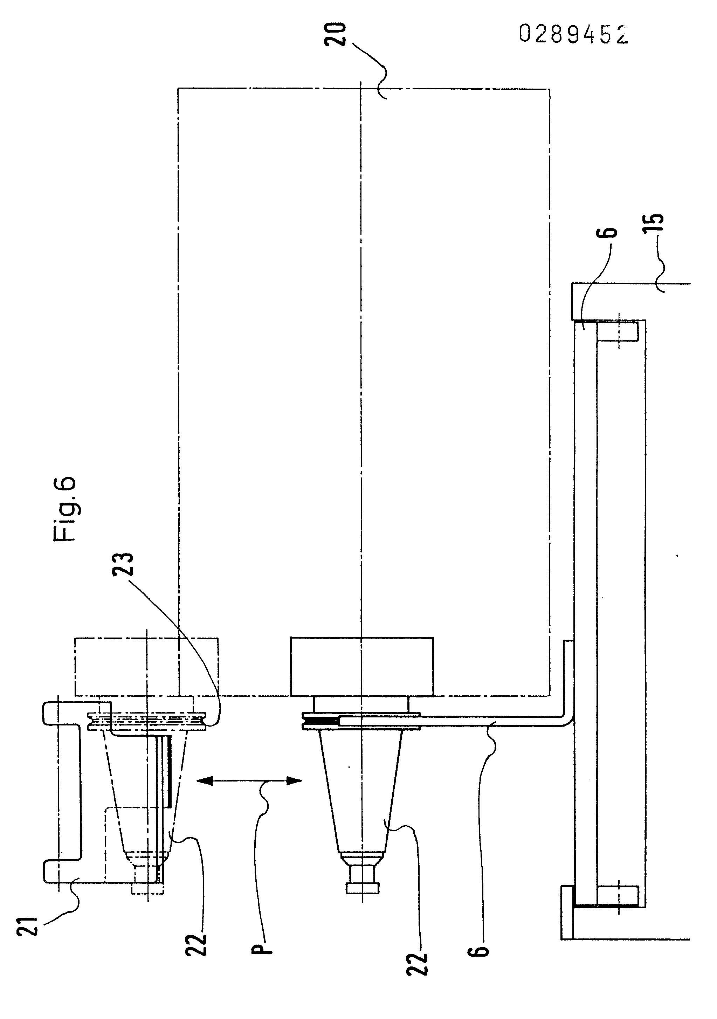

Fig. 6 zeigt zunächst die Kassette 6, ein Werkzeug 20 und eine Aufnahme 21 des Kettenmagazins. Mit 22 ist ein Werkzeughalter bezeichnet. Der Pfeil P veranschaulicht die Bewegung der Kassette 6 mit dem Werkzeug 20. Die Magazinaufnahme 21 ist nach unten geöffnet, und das Werkzeug 20 zusammen mit dem Halter 22 wird von der Kassette 6 von unten nach oben in die Aufnahme 21 hineinbewegt. Nachdem der Halter 22 verriegelt worden ist, bewegt sich die leere Kassette 6 wieder nach unten. (In Fig. 6 ist der Halter 22 in seiner in der Aufnahme 21 eingerasteten Stellung strichpunktiert dargestellt.) Die Aufnahme der Kassette 6 greift in eine Trapezrille 23 des Halters 22 ein. Mit 15 ist wieder der Tisch bezeichnet.

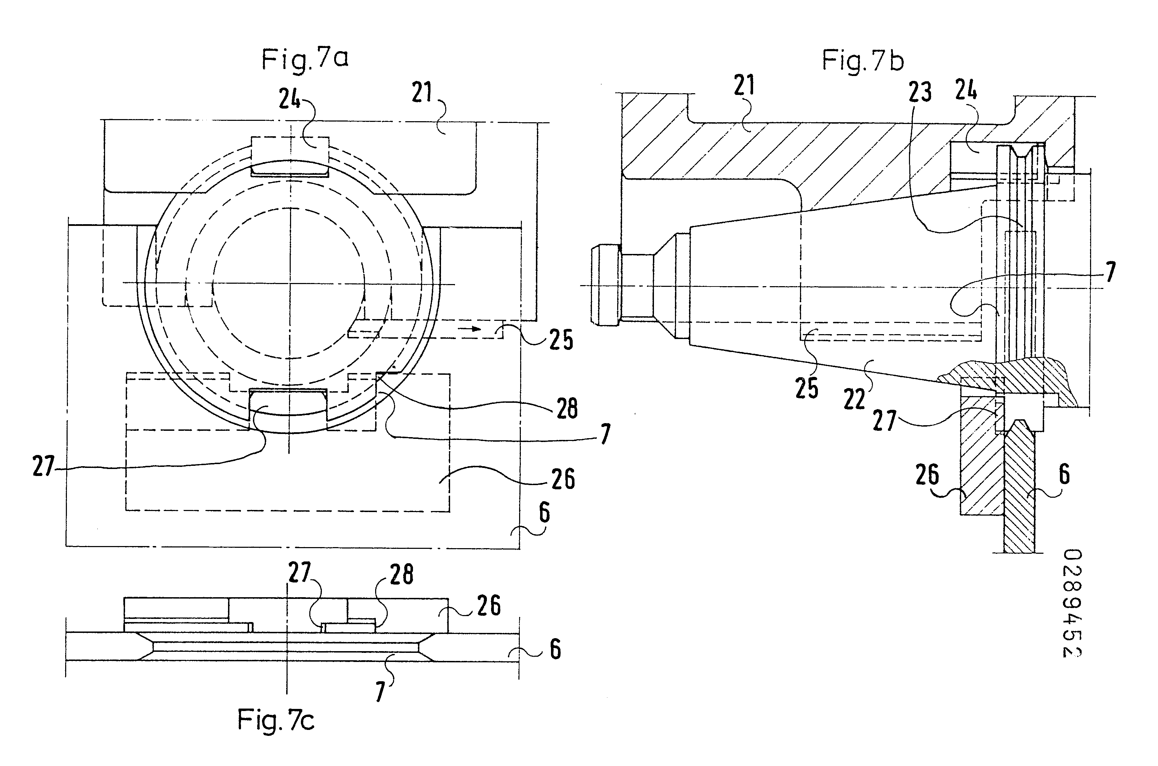

Die Fig. 7a, b und c zeigen in drei Ansichten den oberen Teil von Fig. 6, d.h. die Werkzeugaufnahme 21 des Kettenmagazins mit eingelegtem Werkzeughalter 22 und der Kassette 6 in ihrer oberen ("ersten") Stellung. (In Fig. 7c fehlt die Aufnahme 21 und der Halter 22.) Wie bisher ist die Aussparung in der Kassette 6, die der Werkzeugaufnahme dient, mit 7 bezeichnet. Sie greift in die Trapezrille 23 des Halters 22 ein. Mit 24 ist eine Verdrehsicherung der Kettentasche 21 und mit 25 eine Verriegelungsplatte bezeichnet. Diese kann in bezug auf Fig. 7a nach rechts bewegt werden und gibt dann das eingelegte Werkzeug frei. Die Kassette weist eine Abstützung 26 auf, die ein Abkippen des Werkzeuges 20,22 verhindert. Diese Abstützung 26 ist mit einer Werkzeug-Verdrehsicherung 27 und einer Sicherungsecke 28 gegen falsches Werkzeug-Einlegen ausgerüstet.

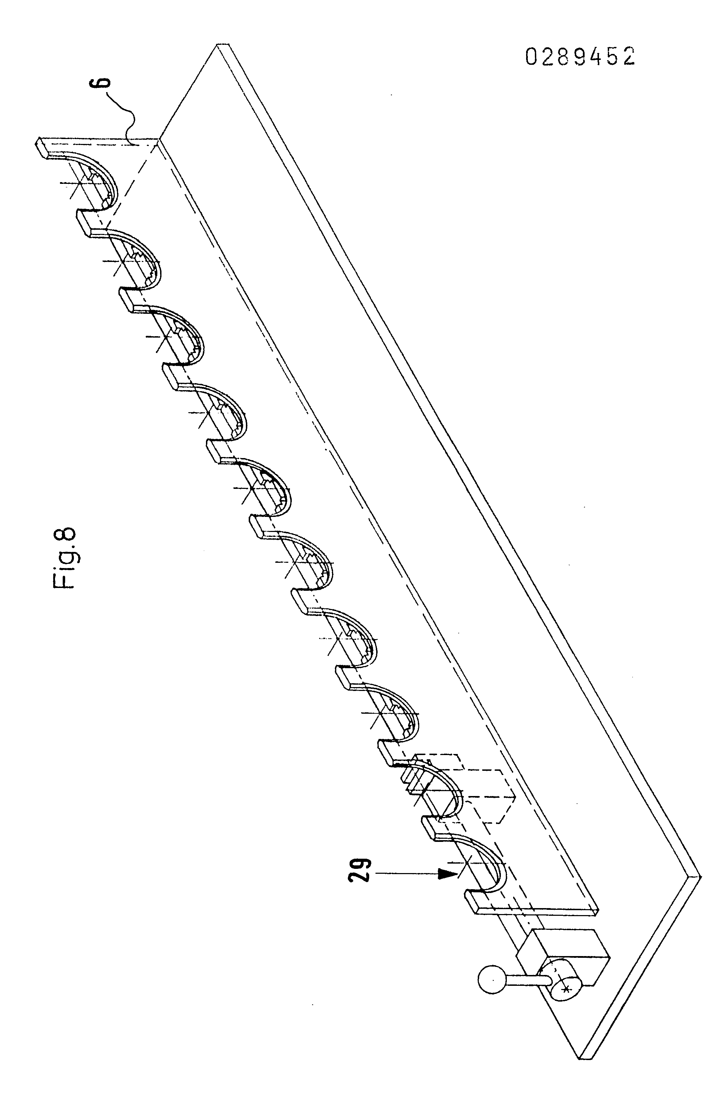

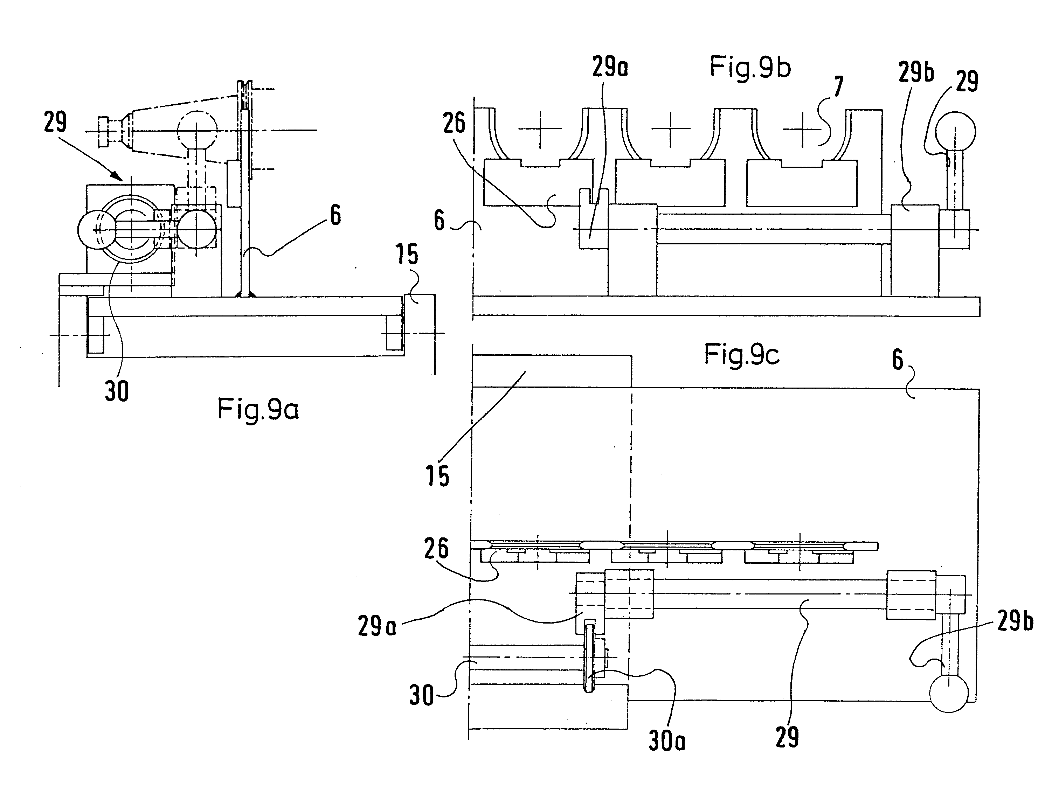

Fig. 8 zeigt die Kassette 6 in Perspektive. Mit 29 ist ein Verriegelungsmechanismus bezeichnet, der mit einem Antriebsmechanismus (s. Fig. 9a,b,c) zur Anwendung kommt.

Die Fig. 9a, b, c zeigen wieder die Kassette 6, den Verriegelungsmechanismus 20 und den Tisch 15. Ein Antriebsmechanismus 30 transportiert die Kassette bei feststehendem Tisch 15 aus der Grundstellung in eine "weitere" Stellung und zurück. Dazu ist ein Teil 30a des Antriebsmechanismus 30 mit einem Teil 29a des Verriegelungsmechanismus 29 verriegelt. Die Verriegelung kann per Hand über den Griff 29b entriegelt werden. Die Kassette kann dann per Hand weiter z.B. auf das Fahrzeug 14 gezogen werden.

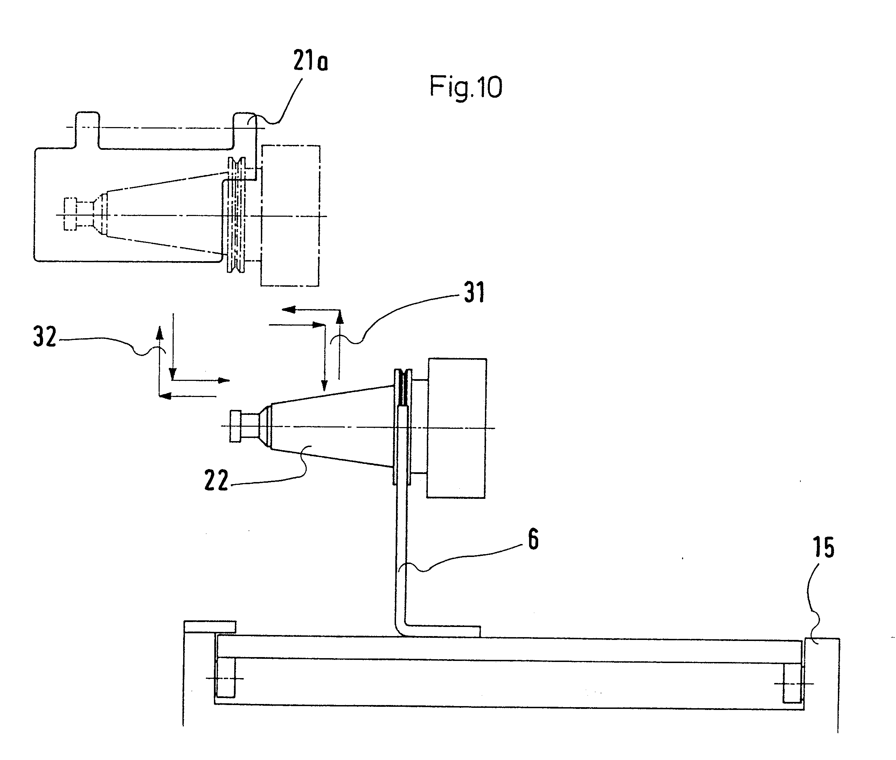

Fig. 10 zeigt eine andere Ausführungsform. Die Darstellung ist vergleichbar mit der Darstellung der Fig. 6. Man erkennt wieder die Kassette 6, den Tisch 15, den Werkzeughalter 22 und eine Magazintasche 21a. In diesem Falle ist die Magazintasche 21a nach unten geschlossen. Das Werkzeug muß also mittels einer Bewegung zunächst nach rechts in bezug auf Fig. 10 aus der Tasche entfernt werden. Die Pfeile 31 veranschaulichen die Bewegungen der Kassette 6 mit eingelegtem Werkzeug. Die Pfeile 32 veranschaulichen die Bewegungen der Kassette 6 ohne eingelegtes Werkzeug, d.h. vor dem Holen und nach dem Bringen eines Werkzeuges

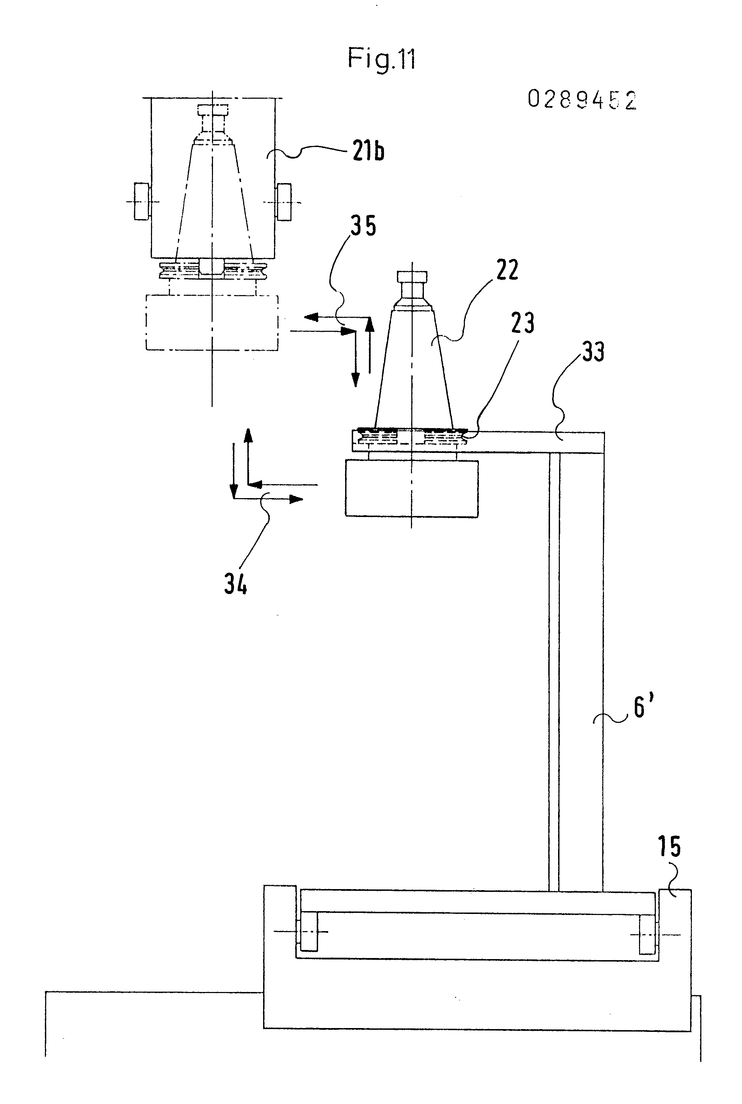

Fig. 11 zeigt eine weitere Ausführungsform. Die Darstellung ist ebenfalls vergleichbar mit Fig. 6. Hierbei ist die Magazintasche 21b im Bereich des unteren Kettentrums nach unten offen. Die Kassette 6' besitzt einen Quersteg 33, der die Halter 22 über deren Rille 23 erfaßt. Die Pfeile 34 veranschaulichen die Bewegungen der Kassette mit Werkzeugen, die Pfeile 35 ohne Werkzeuge, also zum Holen und nach dem Ablegen derselben.

**Patentansprüche**

1. Einrichtung zum Wechseln von Werkzeugen eines numerisch gesteuerten Bearbeitungszentrums mit einem Werkzeug-Kettenmagazin (1), das einen geraden Kettentrum aufweist, gekennzeichnet durch eine Kassette (6) mit mehreren hintereinander angeordneten, zueinander unbeweglichen Werkzeugaufnahmen (7), die die gleichen Abstände wie die Werkzeugaufnahmen des kettenmagazins (1) haben, welche Kassette (6) eine Grundstellung (Fig. 2) und eine erste Stellung (Fig.3) einnehmen kann, wobei in der ersten Stellung von der Kassette (6) an den Trum (1) oder umgekehrt ein Werkzeug oder mehrere Werkzeuge unmittelbar übergeben werden können und in der Grundstellung die Kassette (6) bezüglich der Werkzeuge be- und entladen oder gegen eine andere ausgetauscht werden kann.

2. Einrichtung nach Anspruch 1, dadurch gekennzeichnet, daß die Kassette (6) weitere Stellungen (Fig. 4) zum Werkzeug- oder Kassettenwechsel auf der der ersten Stellung abgewandten Seite der Grundstellung einnehmen kann.

3. Einrichtung nach Anspruch 2, dadurch gekennzeichnet, daß in der Grundstellung ein Werkzeug und in den weiteren Stellungen mehrere Werkzeuge oder die Kassette (6) ausgetauscht wird (werden).

4. Einrichtung nach einem der Ansprüche 1 bis 3, dadurch gekennzeichnet, daß sich im Übergabebereich (11) des Kettentrums (1) so viele Übergabeplätze wie Aufnahmen in der Kassette (6) befinden und daß diesen Plätzen Einheiten (10,12,13) zum Entriegeln der Werkzeuge in der Kette (1) zugeordnet sind, die einzeln oder blockweise betätigt werden können, wobei insbesondere der hinterste Platz für den Einzelwerkzeugaustausch, die nächsten n, z.B. vier Plätze zusammen mit dem ersten für einen blockweisen Austausch und die nächsten m, z.B. fünf Plätze ebenfalls zusammen mit den anderen für einen weiteren blockweisen Austausch vorgesehen sind, wobei die Ansteuerung der Einheiten auch einzeln erfolgen kann.

5. Einrichtung nach einem der Ansprüche 1 bis 4, dadurch gekennzeichnet, daß die Kassette (6) eine langgestreckte Platte ist und die Aufnahmen U-förmige Aussparungen (7), ausgehend von einer Längskante der Platte, sind, wobei die Hin- und Rückbewegung der Kassette (6) zum Trum bzw. vom Trum weg senkrecht zu den Werkzeuglängsachsen erfolgt.

6. Einrichtung nach Anspruch 5, bei der die Kette des Magazins in einer vertikalen Ebene angeordnet ist, die Werkzeuge senkrecht zu dieser Ebene angeordnet sind und das Magazin durch Bewegungen der Werkzeuge in der Ebene be- bzw. entladen wird, dadurch gekennzeichnet, daß die Werkzeugaustauschstelle (11) im Bereich des unteren Kettentrums (1) befindet und die Kassette (6) von dem Trum (1) weg sich zunächst nach unten und dann nach hinten und zum Trum hin in umgekehrter Richtung bewegt (Fig. 2).

7. Einrichtung nach Anspruch 5, bei der die Kette des Magazins in einer vertikalen Ebene angeordnet ist, die Werkzeuge senkrecht zu dieser Ebene angeordnet sind und das Magazin durch Bewegungen der Werkzeuge senkrecht zu dieser Ebene be- und entladen wird, dadurch gekennzeichnet, daß sich die Werkzeugaustauschstelle im Bereich des unteren Kettentrums befindet und die Kassette vom Trum weg sich zunächst seitlich horizontal, dann nach unten und dann nach hinten und zum Trum hin in umgekehrter Richtung bewegt.

8. Einrichtung nach Anspruch 5, bei der die Kette des Magazins in einer vertikalen Ebene angeordnet ist, die Werkzeuge in dieser Ebene angeordnet sind und das Magazin durch Bewegungen der Werkzeuge in der Ebene be- und entladen wird, dadurch gekennzeichnet, daß sich die Werkzeugaustauschstelle im Bereich des unteren Kettentrums befindet und die Kassette vom Trum weg sich zunächst nach unten bewegt, dann sich seitlich horizontal und dann nach hinten und zum Trum hin in umgekehrter Richtung bewegt.

9. Einrichtung nach einem der Ansprüche 5 bis 8, dadurch gekennzeichnet, daß in der ersten Stellung (Fig. 3) eine Kassettenaussparung (7) in eine Rille (23) eines Werkzeughalters (22) eingreift, der seinerseits in der Aufnahme des Kettenmagazins (1) sitzt.

10. Einrichtung nach einem der Ansprüche 1 bis 9, dadurch gekennzeichnet, daß in der Grundstellung (Fig. 2) der Kassette (6) ein Werkzeug per Hand in die Kassette (6), vorzugsweise in deren hinterste Aufnahme (7), eingelegt oder aus dieser entnommen werden kann.

11. Einrichtung nach einem der Ansprüche 2 bis 10, dadurch gekennzeichnet, daß in den weiteren Stellungen (Fig. 4) der Kassette (6) ein Werkzeug oder mehrere, insbesondere alle Werkzeuge per Hand in die Kassette (6) eingelegt oder aus dieser entnommen werden kann (können) oder die Kassette (6) gegen eine andere ausgetauscht werden kann, dies vorzugsweise in der hintersten Stellung.

12. Einrichtung nach einem der Ansprüche 1 bis 11, dadurch gekennzeichnet, daß ein Fahrzeug (14) hinter das Bearbeitungszentrum gefahren und die Kassette (6) auf das Fahrzeug (14) bewegt werden kann.

13. Einrichtung nach Anspruch 12, dadurch gekennzeichnet, daß das Fahrzeug (14) mehrere, insbesondere drei, Kassettenaufnahmen besitzt und vor bzw. nach einem Kassettenwechselvorgang eine Kassette weniger, als Aufnahmen vorhanden sind, trägt, wobei der Wechselvorgang folgendermaßen abläuft:

1.) Eine leere, unmittelbar neben bzw. unter dem Trum (1) in der Grundstellung (Fig. 2) befindliche Kassette (6) wird in die erste Stellung (Fig. 3) gefahren,

2.) die Kassette (6) entnimmt dem Trum (1) gewisse Werkzeuge,

3.) die Kassette (6) wird in die leere Aufnahme des Fahrzeuges (14) gefahren,

4.) eine auf dem Fahrzeug (14) befindliche, mit Werkzeugen bestückte Kassette (6) wird nach entsprechender Verrückung des Fahrzeuges in die erste Stellung (Fig. 3) gefahren,

5.) die Werkzeuge werden an das Magazin (1) übergeben,

6.) die leere Kassette (6) wird in die Grundstellung (Fig. 2) gefahren.

14. Einrichtung nach Anspruch 12 oder 13, dadurch gekennzeichnet, daß das Fahrzeug (14) automatisch bewegt wird und die Kassette(n) (6) automatisch gewechselt wird (werden).

15. Einrichtung nach einem der Ansprüche 1 bis 14, dadurch gekennzeichnet, daß die Kassette (6) auf einem Tisch (15) ruht, vorzugsweise in einer Längsführung gehalten wird und verriegelt ist, wobei der Tisch (15) horizontal und vertikal geführt wird.

16. Einrichtung nach Anspruch 15, dadurch gekennzeichnet, daß der Tisch (15) zwischen der Grundstellung und der ersten Stellung bewegt wird.

17. Einrichtung nach Anspruch 16, dadurch gekennzeichnet, daß ein Antriebsmechanismus (30) vorgesehen ist, der die Kassette (6) bei feststehendem Tisch (15) zwischen der Grundstellung und der weiteren Stellung bzw. den weiteren Stellungen bewegt.

18. Einrichtung nach Anspruch 17, dadurch gekennzeichnet, daß die Kassette (6) einen Verriegelungsmechanismus (29) aufweist, der an dem Antriebsmechanismus (30) angreifen kann.

19. Einrichtung nach Anspruch 18, dadurch gekennzeichnet, daß der Verriegelungsmechanismus (29) zum Kassettenwechsel gelöst wird.

20. Einrichtung nach einem der Ansprüche 1 bis 19, dadurch gekennzeichnet, daß die Kassette (6) in der Grundstellung (Fig. 2) mindestens einen solchen Abstand von dem Kettenmagazin (1) hat, daß sich dieses (1), mit Werkzeugen gefüllt, gerade noch an der leeren Kassette (6) vorbei bewegen kann.

21. Einrichtung nach einem der Ansprüche 1 bis 20, dadurch gekennzeichnet, daß Maßnahmen (26) vorgesehen sind, die ein Abkippen der Werkzeuge (20) in der Kassette (6) verhindern.

22. Einrichtung nach Anspruch 21, dadurch gekennzeichnet, daß bei Vorliegen von Werkzeughaltern (22) mit Rille (23) und U-förmiger Aussparung (7) als Werkzeugaufnahme in der Kassette (6) eine Abstützung (26) an der Kassette (6) vorgesehen ist, die an der Außenfläche des Rillenflansches angreift, vorzugsweise halterseitig.

23. Einrichtung nach einem der Ansprüche 1 bis 22, dadurch gekennzeichnet, daß das Kettenmagazin (1) bei einer festen Platzordnung, bei der ein unverschlissenes Werkzeug beim Rücktransport von der Arbeitsspindel in das Magazin (1) wieder in seinem alten Platz ablegbar ist, in einen Speicherbereich und einen Verschleißbereich und der Speicherbereich in mehrere Unterbereiche unterteilt ist, daß die Platzzahl der Unterbereiche gleich der Platzzahl der Kassette (6) und die Platzzahl des Verschleißbereiches gleich der Platzzahl der Kassette (6) oder kleiner als diese ist, wobei ein verschlissenes Werkzeug nach Einsatz in der Arbeitsspindel in den Verschleißbereich ablegbar ist, von dort allein oder mit weiteren dort abgelegten verschlissenen Werkzeugen mittels der Kassette (6) abholbar und gegebenenfalls gegen neue austauschbar ist und dann, vorzugsweise sofort, mittels eines Sortierlaufes in den ihm zugeordneten Platz im Speicherbereich ablegbar ist und Werkzeuge bei Auftragswechsel über die Unterbereiche auswechselbar sind.

24. Einrichtung nach einem der Ansprüche 1 bis 22, dadurch gekennzeichnet, daß das Kettenmagazin (1) bei einer variablen Platzzuordnung, bei der ein unverschlissenes Werkzeug beim Rücktransport von der Arbeitsspindel in das Magazin (1) in einen beliebigen Platz ablegbar ist, in einen oder mehrere Wechselbereiche, einen Speicherbereich und einen Verschleißbereich unterteilt ist, daß die Platzzahl eines Wechselbereiches gleich der Platzzahl der Kassette, die Platzzahl des Verschleißbereiches gleich der Platzzahl der Kasette (6) oder kleiner als diese ist und die restlichen Plätze des Magazins (1) den Speicherbereich bilden, wobei ein verschlissenes Werkzeug nach Einsatz in der Arbeitsspindel in den Verschleißbereich ablegbar ist, von dort allein oder mit weiteren dort ab gelegten verschlissenen Werkzeugen mittels der Kassette (6) abholbar und gegebenenfalls gegen neue austauschbar ist und dann, vorzugsweise sofort, mittels eines Sortierlaufes in einen Platz des Speicherbereiches ablegbar ist und Werkzeuge bei einem Auftragswechsel nach Bearbeitung des letzten Werkstückes unmittelbar in den Wechselbereich ablegbar sind, soweit sie für den nächsten Auftrag nicht mehr benötigt werden bzw. Plätze für zusätzliche, für die Bearbeitung des nächsten Auftrages benötigte Werkzeuge freigemacht werden müssen, und von dort durch Kassettenwechsel gegen diese austauschbar sind.

25. Einrichtung nach Anspruch 24, dadurch gekennzeichnet, daß ein Wechselbereich oder mehrere auch als Speicherbereich(e) benutzbar ist (sind), was bei Auftragswechsel einen Sortierlauf erforderlich macht.

Fig.1

0289452

Fig. 2

# Fig.3

028945<sub>2</sub>

# Fig. 4

02894 52

Fig.5

Fig.6

Fig.7a

Fig.7b

Fig.7c

Fig.8

0289452

Fig.9a

Fig.9b

Fig.9c

0289452

Fig.10

# Fig.11

0289452

21b

35

22

23

33

34

6'

15